**Europäisches Patentamt**

**European Patent Office**

**Office européen des brevets**

(19)

(11) Numéro de publication : **0 478 477 A1**

# (12) DEMANDE DE BREVET EUROPEEN

(21) Numéro de dépôt : **91420338.5**

(22) Date de dépôt : **24.09.91**

(51) Int. Cl.⁵ : **D02G 3/44,** D02G 3/40, B29C 67/14, B29C 53/14

(30) Priorité : **28.09.90 FR 9012454**

(43) Date de publication de la demande :
**01.04.92 Bulletin 92/14**

(84) Etats contractants désignés :
**AT BE CH DE DK ES FR GB GR IT LI LU NL SE**

(71) Demandeur : **BABOLAT VS**
**93 rue André Bollier**
**F-69007 Lyon (FR)**

(72) Inventeur : **Planck, Heinrich**
**Weinbergstrasse 66**
**W-7444 Nurtingen (DE)**

Inventeur : **Mayr, Karl**
**Limburgstrasse 10**
**W-7313 Dettingen (DE)**
Inventeur : **Yilmaz, Dagmar**
**Christopherstrasse 13**
**W-7400 Tubingen (DE)**
Inventeur : **Andress, Bernd**
**Piemonteserstrasse 54**
**W-7141 Erdmannshausen (DE)**
Inventeur : **Longeat, Gerard**
**145, rue Vauban**
**F-69006 Lyon (FR)**

(74) Mandataire : **Maureau, Philippe et al**
**Cabinet Germain & Maureau Le Britannia -**
**Tour C 20, bld Eugène Déruelle Boîte Postale**
**3011**
**F-69392 Lyon Cédex 03 (FR)**

(54) **Procédé et dispositif pour la fabrication d'une corde pour le cordage de raquettes de tennis ou similaire et corde en résultant.**

(57)     Ce procédé est du type selon lequel des filaments sont enrobés dans une matière thermoplastique.
     Les filaments traversent une chambre (14,26) dans laquelle ils passent sur plusieurs corps de renvoi (15-19) et qui est remplie d'une matière thermoplastique sous pression et rendue visqueuse par chauffage, ce qui a pour effet d'enrober les filaments dans une matrice constituée par cette matière plastique, à la sortie de la chambre (14,26), les filaments passent à travers au moins une filière (25',27), avec la matrice les enrobant, le pseudo-monofilament (30) ainsi formé subit une torsion et, ensuite, il est revêtu d'une gaine en matière thermoplastique, résistant à l'usure.

EP 0 478 477 A1

Fig.1

La présente invention concerne un procédé de fabrication d'une corde, destinée au cordage de raquettes de tennis ou similaire, dans lequel des filaments sont enrobés dans une matière thermoplastique. Elle concerne encore une corde de tennis, obtenue suivant ce procédé et un dispositif pour la mise en oeuvre du procédé. Par corde de tennis on entend une corde destinée au cordage de raquettes de tennis ou similaire. Une utilisation différente de cette corde n'est évidemment pas exclue.

On connaît un procédé du type précité par le document US 4 707 977. Plusieurs multifils, constitués de monofilaments, sont réunis dans une filière et une matière thermoplastique injectée sous pression est injectée, sur et dans ce faisceau de filaments, afin qu'il soit enrobé de matière plastique. A la sortie de la filière, on donne une torsion au faisceau de filaments, la corde ainsi formée pouvant encore traverser une filière de formage, avant d'être refroidie. On a constaté, toutefois, que la corde ainsi formée ne satisfaisait pas encore à toutes les exigences que l'on recherche, par exemple, pour une corde destinée au cordage d'une raquette de tennis en raison, notamment, d'une liaison insuffisante entre les filaments et la matière plastique injectée pour les enrober.

L'invention se propose donc d'obtenir par un procédé de fabrication du type précité, et à un faible prix de revient, une liaison intime entre les filaments et la matière plastique qui les enrobe.

Selon le procédé de l'invention, les filaments traversent une chambre dans laquelle ils passent sur plusieurs corps de renvoi et qui est remplie d'une matière thermoplastique, sous pression et rendue visqueuse par chauffage, ce qui a pour effet d'enrober les filaments dans une matrice constituée par cette matière thermoplastique, à la sortie de la chambre, les filaments passent à travers au moins une filière, avec la matrice les enrobant, le pseudo-monofilament ainsi formé subit une torsion et, ensuite, il est revêtu d'une gaine en matière thermoplastique, résistant à l'usure. On obtient ainsi une corde de tennis contenant une forte proportion de filaments et qui présente une caractéristique allongement/tension particulièrement favorable au cordage d'une raquette de tennis et semblable à une corde en boyau. Etant donné qu'une filière, au moins, peut être exactement adaptée au nombre de monofilaments utilisés et que ceux-ci sont pratiquement parallèles entre eux, on peut, grâce à ce procédé, obtenir une proportion élevée de filaments dans le pseudo-monofilament obtenu, les différents filaments étant très bien enrobés dans la matière thermoplastique, par suite des multiples changements de direction qu'ils subissent. Du fait de la torsion et du gainage ultérieur, avec une matière plastique résistante, on obtient un produit final solide qui conserve sa forme pendant le jeu de tennis ou autre.

Suivant un mode de mise en oeuvre préféré de ce procédé, à la sortie de la première chambre, les filaments dans leur matrice en matière thermoplastique, traversent successivement une filière intermédiaire, une deuxième chambre remplie de matière thermoplastique chauffée, puis une filière de sortie. On peut ainsi obtenir, à la sortie de la filière intermédiaire, un pseudo-monofilament présentant une proportion élevée de filaments puis, par passage dans la deuxième chambre et la filière de sortie, déposer, sur ce pseudo-monofilament, un mince film de matière thermoplastique, adhérant parfaitement à ce pseudo-monofilament. A cet effet, la dernière filière possède un diamètre supérieur, de quelques pour cent, à la filière intermédiaire.

Selon un mode de réalisation avantageux de ce procédé, les pseudo-monofilaments sont enroulés sur une bobine, à la sortie de la filière, cette bobine est placée sur un dévidoir tournant et le pseudo-monofilament se trouvant sur elle est dévidé de la bobine en lui imprimant une rotation suivant deux axes orthogonaux conférant au pseudo-monofilament la torsion voulue. Cette torsion est avantageusement d'environ 30 à 150 tours/m et, de préférence, comprise entre 60 et 100 tours/m. Le pseudo-monofilament traverse avantageusement, pendant la torsion, un tube chauffant où sa matrice en matière thermoplastique ainsi que sa couche la plus extérieure sont chauffées et ramollies. Ce chauffage sera mis à profit pour assurer une liaison intime entre la matrice et la gaine extrudée ultérieurement. Après extrusion de la gaine, le refroidissement et la solidification de la matrice fixent la torsion.

De préférence, on limite la longueur de pseudo-monofilament sur laquelle s'applique la torsion par un système conjoint de frein à rouleaux tournant et de frein à rouleaux fixe. Le frein à rouleaux tournant est, de préférence, situé en amont du tube chauffant tandis que le frein à rouleaux fixe est, de préférence, situé en aval du tube chauffant.

La gaine peut être réalisée avec la même matière thermoplastique que la matrice enrobant les filaments, mais de préférence, elle est réalisée en une matière qui, suivant les exigences d'utilisation de la corde, est particulièrement solide, résistante aux chocs, stable à la lumière et insensible à l'humidité, afin de rendre la corde particulièrement résistante aux-sollicitations, qu'elle subit, notamment lors du cordage de la raquette ou, ultérieurement, pendant le jeu de tennis. De préférence, la gaine extérieure possède une épaisseur de 0,05 à 0,1 mm de manière à protéger les filaments, sur toute la face extérieure du pseudo-monofilament, afin que la corde conserve sa pleine résistance, même sous l'effet de sollicitations mécaniques.

D'autres caractéristiques et avantages de l'invention ressortent de la description détaillée qui suit d'un mode de réalisation représenté, à titre d'exemple non limitatif, sur le dessin annexé, dans lequel :

Figure 1 est une vue du dispositif pour la mise en oeuvre de la première étape du procédé suivant l'invention,

Figure 2 est une vue d'une première forme d'exécution du dispositif pour la mise en oeuvre de la deuxième étape du procédé suivant l'invention,

Figure 3A et 3B sont, respectivement, une vue en coupe du pseudo-monofilament tel qu'il peut être fabriqué lors de la première étape du procédé suivant l'invention (figure 3A) et du pseudo-monofilament, entouré d'une gaine extérieure (figure 3B), c'est-à-dire la corde de tennis finie, telle qu'elle résulte de la deuxième étape du procédé suivant l'invention,

Figure 4 est un diagramme qui montre la caractéristique allongement/tension d'une corde de tennis, obtenue par la mise en oeuvre du procédé suivant l'invention et

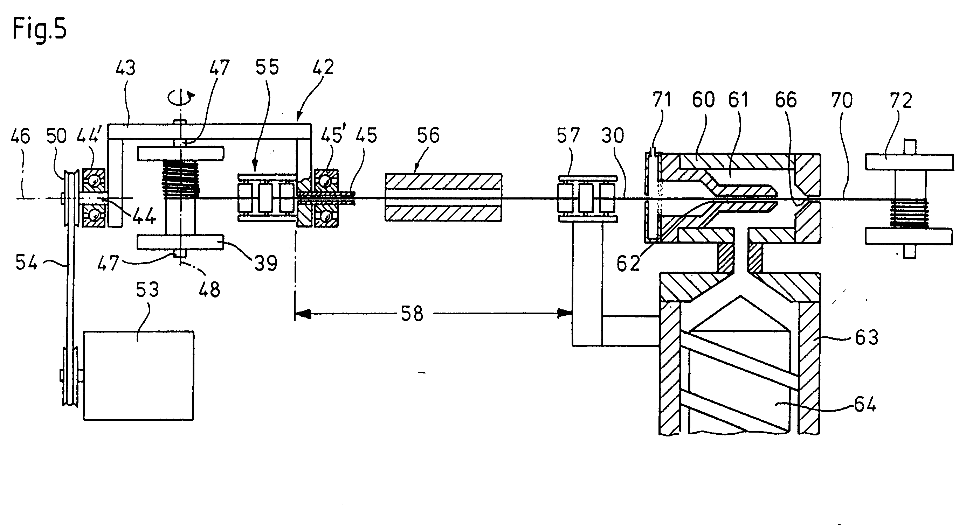

Figure 5 est une vue d'une deuxième forme d'exécution du dispositif pour la mise en oeuvre de la deuxième étape du procédé suivant l'invention.

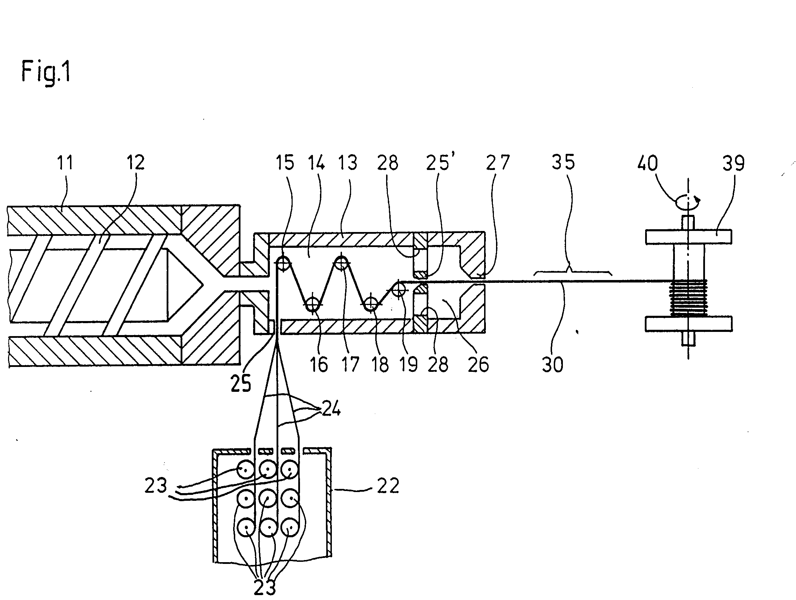

La figure 1 montre, à gauche, une extrudeuse 11 avec une vis d'extrudeuse 12 au moyen de laquelle une matière thermoplastique, provenant d'une trémie (non représentée) peut être injectée dans un outil 13 présentant une chambre 14 fermée. L'outil 13 est maintenu à une température constante de 150°C par exemple, par un dispositif de chauffage thermostatique (non représenté). La vis d'extrudeuse 12 maintient, dans la cavité 14, une pression de 3 bar par exemple. Comme matière thermoplastique, on peut utiliser, par exemple, un polyamide qui, à la température réglée, présente une viscosité faible ou moyenne.

Dans la chambre 14 se trouve, de la gauche vers la droite sur la figure 1, par exemple, cinq éléments de renvoi 15 à 19. Dans un ratelier 22 sont placées, dans cet exemple, neuf bobines 23 de multifils 24 constitués de monofilaments non revêtus. Les multifils 24, issus du ratelier 22, entrent, par une ouverture latérale 25, dans la chambre 14 de l'outil 13. Depuis l'ouverture 25, ces multifils 24 passent, par exemple, successivement vers l'élément de renvoi 15 par lequel ils sont déviés, d'environ 160°, vers l'élément de renvoi 16 par lequel ils sont déviés d'environ 140°, vers l'élément de renvoi 17 par lequel ils sont déviés de 140°, vers l'élément de renvoi 18 par lequel ils sont finalement déviés de 140° vers l'élément de renvoi 19. Ces multiples changements de direction donnent lieu à un élargissement en éventail des multifils, de sorte que chaque monofilament constitutif peut être gainé, de manière optimale, par la masse de matière plastique, dans la chambre 14.

A la sortie du dernier élément de renvoi, les multifils se dirigent vers une première filière 25' qui peut être désignée aussi par filière intermédiaire et dont le rôle est de former un pseudo-monofilament qui contient une forte proportion de filaments et une petite proportion de la matrice enrobant ces filaments. A partir de la première filière 25', les filaments traversent une chambre 26 extérieure, en direction d'une deuxième filière 27 qui peut être désignée aussi par dernière filière et dont la fonction est aussi de former un pseudo-monofilament 30 qui contient une forte proportion de filaments et une faible proportion de la matrice en matière plastique enrobant ces filaments. En outre, la deuxième filière a pour but de donner au fil 30, une surface lisse. Les chambres 14 et 26 sont reliées entre elles, par les ouvertures 28 et contiennent donc la même matière plastique fondue, de viscosité faible à moyenne. La température de cette matière plastique fondue est généralement inférieure à la température de fusion des monofilaments des multifils 24. La température de la masse fondue est choisie de manière à assurer une liaison intime entre la matrice et la surface des monofilaments constitutifs du multifil.

Il faut noter que, par leur déviation sur les éléments de renvoi 15 à 19, les multifils 24 sont aplatis et élargis en éventail, de sorte que les monofilaments sont en contact étroit avec la matière plastique en fusion dans l'outil 13. On pourrait encore dévier les fils dans une direction, perpendiculaire au plan du dessin sur la figure 1, afin d'améliorer encore le contact avec la masse fondue, mais on a constaté qu'avec le type de renvoi représenté, on obtenait déjà un excellent contact des différents monofilaments avec la matière plastique fondue. On obtient, à la sortie de la dernière filière 27, un fil 30 qui - bien que constitué de nombreux monofilaments séparés - se présente comme un monofilament et c'est pourquoi on le désigne ici par pseudo-monofilament.

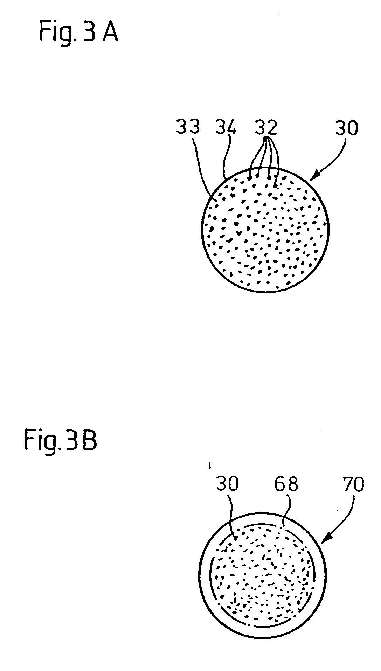

La dernière filière 27 a, opportunément, un diamètre supérieur, de quelques centièmes de mm, par exemple de 2 à 6 %, à la filière intermédiaire 25' ; par exemple, dans un exemple de réalisation, la filière intermédiaire 25' avait un diamètre de 1,2 mm et la dernière filière 27, un diamètre de 1,25 mm. Il est à signaler que ces filières sont conçues de manière qu'il ne reste sur les fils, à l'extérieur, qu'une mince couche de matière thermoplastique, c'est-à-dire que, dans une première étape du procédé, le dispositif de la figure 1 permet de réaliser un pseudo-monofilament 30, tel que représenté à plus grande échelle et fortement schématisé sur la figure 3A. Il est essentiel que les monofilaments individuels soient placés très près de la surface extérieure du fil. Celui-ci contient, par exemple, environ 1000 filaments individuels 32 qui ont été enrobés, dans les chambres 14 et 26, dans une matrice en matière thermoplastique 33. Le nombre de monofilaments individuels est fonction de la résistance exigée pour la corde de tennis et se situe généralement entre 700 et 2 800.

Les filaments 32 peuvent être en polyéthylène et leur matière d'enrobage ou de gainage peut être du polyéthylène ou du polypropylène. Le point de fusion de la matrice en matière plastique 33 d'enrobage est, de préférence, à peu près égal à celui des filaments 32. Enfin, la proportion de filaments 32 que contient cette corde est avantageusement comprise entre 55 et 90 % en poids environ.

Si l'on admet, par exemple, que chacun des neuf multifils 24 contient environ 140 monofilaments, le pseudo-monofilament 30 contient au total environ 1260 monofilaments. Le fil 30 (figure 3A) ne présente, de préférence, sur sa face extérieure, qu'une mince couche en matière plastique 34 quine suffirait guère à protéger les monofilaments extérieurs.

A la sortie de la dernière filière 27, le pseudo-monofilament 30 est refroidi dans la région 35, par exemple par un ventilateur - non - représenté - puis enroulé sur une bobine 39, ce qui est indiqué par la flèche 40. La bobine 39 contient donc le pseudo-monofilament 30 avec une mince couche extérieure 34 en matière thermoplastique.

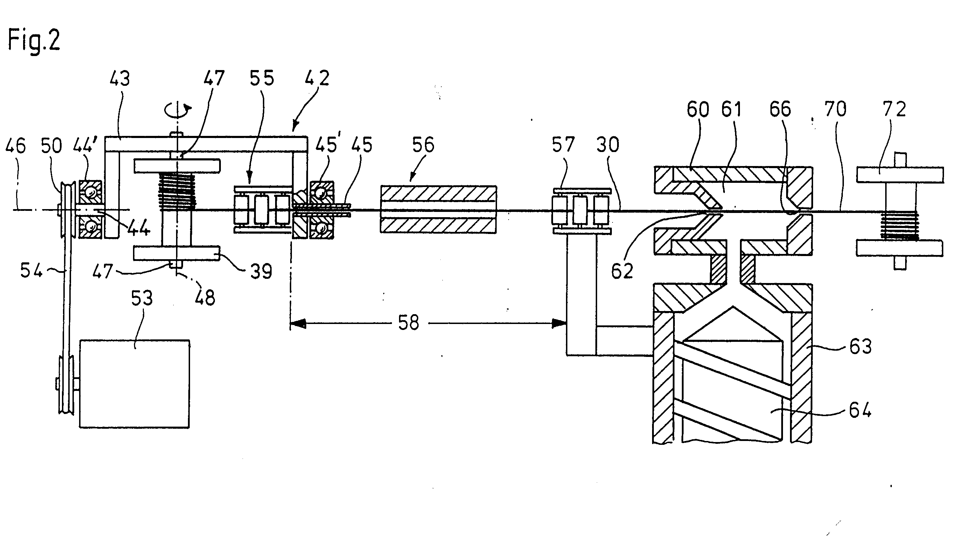

La bobine 39, avec le pseudo-monofilament 30, est placée, comme montré sur la figure 2, dans un dévidoir tournant 42. Dans cette forme de réalisation, représentée ici à titre d'exemple, ce dévidoir comprend un étrier 43 en C, pourvu de deux axes de rotation 44,45, monté dans deux paliers à billes 44', 45', et qui peut donc tourner autour d'un axe longitudinal 46. Perpendiculairement à cet axe longitudinal 46, un tourillon 47, qui définit un axe transversal 48, est fixé sur l'étrier 43. La bobine 39 est montée tournante sur ce tourillon 47, de sorte qu'elle peut tourner autour de l'axe longitudinal 46 et de l'axe transversal 48.

Une poulie 50, montée en bout de l'axe 44, peut être entraînée en rotation par un moteur 53, par l'intermédiaire d'une courroie trapézoïdale 54.

L'axe 45 est creux, comme représenté, de sorte que le pseudo-monofilament 30 peut le traverser. Un frein à rouleaux 55 est monté sur l'étrier 43, de sorte qu'il peut tourner, avec lui, sur l'axe 45. Il empêche que la torsion du fil 30 ne se propage jusqu'à la bobine 39.

A sa sortie de l'axe creux 45, le pseudo-monofilament 30 est guidé à travers un tube chauffant 56 dont la fonction est de chauffer la matrice en matière plastique 33 et la couche de matière plastique extérieure 34 (figure 3A) de façon à les ramollir. Au tube chauffant 56 fait suite, comme représenté, un frein à rouleaux 57, fixe, qui a, pour but, de limiter à la région 58, située entre les deux freins à rouleaux 55 et 57, la torsion qui est impartie au pseudo-monofilament 30, en l'empêchant de se propager vers la droite sur la figure 2.

A la sortie du frein à rouleaux 57 fixe, le pseudo-monofilament 30 qui a reçu, par exemple, une torsion de 70 tours/m, et qui a été chauffé à travers le tube chauffant 56, passe, par un orifice d'entrée 62, dans un outil de gainage 60 dont la chambre 61 est remplie d'une masse fondue de polymère. Le polymère est injecté, par une extrudeuse 63 pourvue d'une vis 64, dans la chambre 61 qui est maintenue, par un dispositif de chauffage - non représenté - à réglage thermostatique, à une température de 200°C par exemple. Dans cet outil, on obtient une liaison intime entre la matrice de matière plastique 33 - chauffée par le tube chauffant 56 - et la masse fondue de polymère, contenue dans l'outil de gainage 60. La température de la masse fondue peut être supérieure à la température de fusion des multifils 24, entre autres, à cause de la vitesse relativement élevée du fil 30 dans cette masse fondue et qui peut être de l'ordre de 100 m/min.

L'outil de gainage 60 possède une filière de sortie 66 dont le diamètre est légèrement supérieur à celui du pseudo-monofilament 30 qui le traverse ; par exemple, ce diamètre peut être supérieur de 0,1 mm au diamètre du fil 30, c'est-à-dire que lorsque celui-ci a, par exemple, un diamètre compris entre 1,2 et 1,25 mm, le diamètre de la filière de sortie 66 est, par exemple, de 1,35 mm.

Le polymère fondu, contenu dans la chambre 61, est à une pression relativement élevée qui, suivant le polymère utilisé, est de l'ordre de 2 à 100 bar et s'élève, de manière caractéristique, à environ 60 bar. Ceci est nécessaire car on utilise, pour le gainage, une matière plastique de viscosité élevée qui confère à la gaine les caractéristiques mécaniques qui lui sont nécessaires, c'est-à-dire meilleure résistance à l'usure et aux chocs, et plus grande rigidité que la matrice de matière thermoplastique 33 dans laquelle sont enrobés des filaments 32 et qui, en outre, est stable à la lumière et insensible à l'humidité. Comme le montre la figure 3B, le pseudo-monofilament 30 est donc revêtu, dans la chambre 61, d'une gaine 68 faite de ce polymère et dont l'épaisseur est de l'ordre de 0,05 à 0,1 mm. Sa forme et son épaisseur sont déterminées par la filière de sortie 66 d'où sort donc la corde de tennis 70 finie qui - après refroidissement convenable - est enroulée sur une bobine 72.

D'une manière générale, on constate que les filaments de la corde finie qui sont enrobés dans la matrice en matière plastique, sous précontrainte, présentent une perte de tension très faible, car la précontrainte est pratiquement fixée de manière irréversible, par la masse de matière plastique.

Dans la description qui précède, on a considéré qu'une seule corde en matière plastique présentant un seul pseudo-monofilament lui servant d'âme. Il est, toutefois, possible, aussi, de tordre entre eux plusieurs pseudo-monofilaments et de les pourvoir d'une gaine commune. Il est possible aussi dans ce cas, de torsader entre eux des fils de différentes couleurs.

Des exemples de cordes de tennis suivant l'invention sont indiqués ci-après :

Exemple 1 :

On utilise neuf multifils 24 dont sept contiennent chacun 140 filaments et deux, 210 filaments de polyamide 6.6 (température de fusion environ 240°C). Dans la chambre 14, ces filaments sont déviés cinq fois et traversent, à une vitesse de 1 m/min, une masse fondue de polyamide EMS D 590 G dont ils sont enrobés. Cette masse fondue est maintenue à une température de 150°C et une pression de 3 bar. A la sortie de la dernière filière, le pseudo-monofilament 30 a un diamètre extérieur de 1,2 à 1,25 mm et une proportion de filaments d'environ 70 % en poids.

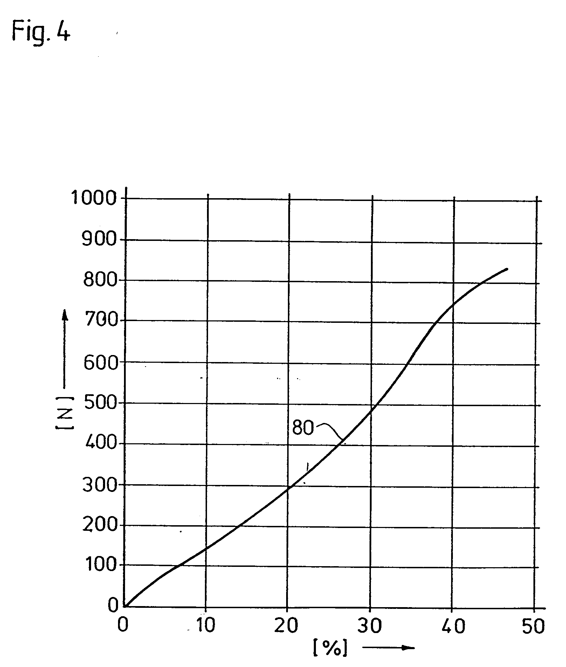

Dans le dispositif de la figure 2, le pseudo-monofilament 30 subit une torsion de 70 tours/m et, dans l'outil de gainage 60, il passe, à une vitesse de 2 m/min, dans une masse fondue de polymère de polyamide 12 EMS 25 W.4 O, maintenue à 200°C, sous une pression de 30 bar. A la sortie de la filière de sortie 66, le produit final 70 a un diamètre extérieur d'environ 1,35 mm. Il présente une résistance à la rupture de plus de 80 kg. Sa courbe caractéristique allongement/tension 80 est représentée sur la figure 4. On voit qu'elle est très semblable à celle d'une corde en boyau.

Exemple 2 :

On utilise neuf multifils 24 dont sept contiennent chacun 140 filaments et deux, 210 filaments de polyamide 6.6 (température de fusion environ 240°C). Dans la chambre 14, ces filaments sont déviés cinq fois et traversent, à une vitesse de 1 m/min, une masse fondue de polyamide EMS D 590 G dont ils sont enrobés. Cette masse fondue est maintenue à une température de 150°C et une pression de 3 bar. A la sortie de la dernière filière, le pseudo-monofilament 30 a un diamètre extérieur de 1,2 à 1,25 mm et une proportion de filaments d'environ 70 % en poids.

Dans le dispositif de la figure 2, le pseudo-monofilament 30 subit une torsion de 70 tours/m et, dans l'outil de gainage 60, il traverse, à une vitesse de 40 m/min, une masse fondue de polymère de polyamide ultramide C35 maintenue à une température de fusion d'environ 240°C, sous une pression de 50 bar. A la sortie de la dernière filière 66, le produit fini 70 a un diamètre extérieur compris entre 1,35 mm et 1,4 mm. La corde a une résistance à la rupture supérieure à 80 kg. Sa courbe caractéristique allongement/tension 80 est représentée sur la figure 4 et est très semblable à celle d'une corde en boyau.

Exemple 3 :

On utilise une âme qui a été fabriquée suivant le même procédé que dans les exemples 1 et 2.

Le dispositif décrit en référence à la figure 2 est modifié pour ce procédé dans la mesure où l'on associe à l'outil 60 une chambre à vide 71 que le fil 30 traverse avant de pénétrer dans la chambre 61, remplie avec le polymère fondu.

Le pseudo-monofilament 30 subit une torsion d'environ 70 tours/m et passe à travers l'outil de gainage 60, à une vitesse d'environ 40 m/min. On dépose, alors, sur le pseudo-monofilament, une gaine qui s'applique fermement sur l'âme, en raison de la dépression régnant dans la chambre à vide et qui se lie avec celle-ci. Dans cet exemple de réalisation et contrairement aux exemples de réalisation décrits ci-dessus, l'âme et la gaine ne sont donc pas assemblées par cohésion ou adhérence. La masse de polymère fondue, l'ultramide B35, est maintenue à une température d'environ 245°C. Le produit fini a un diamètre final de 1,35 à 1,4 mm.

Dans le cadre de l'invention, les filaments peuvent être, par exemple, en polyester, polyamide, aramide, polyimide et polyéther-cétone.

La matière plastique d'enrobage des filaments (dans la chambre 14, 26) peut être, par exemple, en polyamide, copolyamide, polyester, polyuréthane, colle de fusion thermoplastique et élastomère.

La matière plastique de fabrication de la gaine 68 peut être, par exemple, en polyamide, copolyamide, polyester, polyuréthane, élastomère et polyacétal.

Il est à signaler tout particulièrement qu'une corde de tennis suivant l'invention conserve sa forme ; si elle est, par exemple, légèrement aplatie, sous l'effet d'une sollicitation, elle reprend sa forme intiale, de section transversale circulaire, après relâchement de la sollicitation.

Du fait que l'on utilise une autre matière thermoplastique pour la gaine 68 que pour la matrice 33, on peut, dans chaque cas, recourir aux matières plastiques optimales pour la fonction considérée. En particulier, on peut utiliser, pour la matière plastique de la gaine, une matière à haut point de fusion qui présente la résistance nécessaire.

Diverses variantes et modifications sont naturellement possibles dans le cadre de l'invention.

**Revendications**

1. Procédé pour la fabrication d'une corde, destinée au cordage de raquettes, dénommée ci-après corde de tennis, selon lequel des filaments (32) sont enrobés dans une matière thermoplastique, caractérisé en ce que les filaments (32) traversent une chambre (14,26) dans laquelle ils passent sur plusieurs corps de renvoi (15-19) et qui est remplie d'une matière thermoplastique sous pression et rendue visqueuse par chauffage, ce qui a pour effet d'enrober les filaments (32) dans une matrice constituée par cette matière plastique, en ce qu'à la sortie de la chambre (14,26), les filaments (32) passent à travers au moins une filière (25′,27), avec la matrice (33) les enrobant, en ce que le pseudo-monofilament (30) ainsi formé subit une torsion et en ce qu'ensuite, il est revêtu d'une gaine (68) en matière thermoplastique, résistant à l'usure.

2. Procédé selon la revendication 1, caractérisé en ce qu'à la sortie de la chambre (14), les filaments (32) enrobés dans la matrice (33), traversent, successivement une filière intermédiaire (25), une deuxième chambre (26), remplie de matière thermoplastique chauffée, et enfin une filière de sortie (27).

3. Procédé selon la revendication 1 ou 2, caractérisé en ce que les pseudo-monofilaments (30) sont enroulés sur une bobine (39), à la sortie de la filière (27), en ce que cette bobine (39) est placée dans un dévidoir tournant (42) qui sert à la faire tourner autour de son axe longitudinal (46) et autour d'un axe transversal (48), perpendiculaire au premier et en ce que le pseudo-monofilament (30) se trouvant sur elle est dévidé de la bobine (39) en lui imprimant une rotation autour des deux axes de rotation orthogonaux (46,48) précités, ce qui lui confère la torsion voulue.

4. Procédé selon la revendication 3, caractérisé en ce qu'on fait subir au pseudo-monofilament (30) une torsion de 30 à 150 tours/m.

5. Procédé selon la revendication 3, caractérisé en ce qu'on fait subir une torsion de 60 à 100 tours/m.

6. Procédé selon la revendication 4 ou 5, caractérisé en ce que pendant la torsion, le pseudo-monofilament (30) traverse un tube chauffant (56).

7. Procédé selon l'une quelconque des revendications 3 à 6, caractérisé en ce que la torsion du pseudo-monofilament (30) est limitée à une section (48) déterminée, par un frein à rouleaux (55), tournant avec le dévidoir et par un frein à rouleaux fixe (57).

8. Procédé selon l'une quelconque des revendications précédentes, caractérisé en ce qu'on utilise des filaments (32) en matière plastique du groupe polyester, polyamide, aramide, polyimide et polyéther-cétone ou en polyéthylène.

9. Procédé selon l'une quelconque des revendications précédentes, caractérisé en ce que, pour enrober les filaments (32) et/ou pour gainer le pseudo-monofilament (30), on utilise une matière plastique du groupe polyamide, copolyamide, polyester, polyuréthane, polyéthylène, polypropylène, des colles à fusion thermoplastique et des élastomères.

10. Procédé selon l'une quelconque des revendications précédentes, caractérisé en ce que le point de fusion de la matrice en matière plastique (33) d'enrobage est inférieur à celui des filaments (32).

11. Procédé selon l'une quelconque des revendications 1 à 9, caractérisé en ce que le point de fusion de la matrice en matière plastique (33) d'enrobage est à peu près égal à celui des filaments (32).

12. Procédé selon l'une quelconque des revendications précédentes, caractérisé en ce que le point de fusion de la matière plastique formant la gaine (68) est supérieur à celui des filaments (32).

13. Corde de tennis, obtenue par le procédé selon l'une quelconque des revendications précédentes.

14. Corde de tennis selon la revendication 13, caractérisée en ce que la proportion des filaments (32) qu'elle contient est comprise entre 55 et 90 % en poids environ.

15. Corde de tennis selon la revendication 13, caractérisée en ce que le nombre des pseudo-monofilaments (30) qu'elle contient est compris entre 700 et 2 800 environ.

16. Dispositif pour la mise en oeuvre du procédé selon l'une quelconque des revendications 1 à 12, caractérisé en ce qu'il comporte une chambre (14,26) destinée à recevoir une matière thermoplastique rendue visqueuse par chauffage et contenant des éléments de renvoi (15 à 19) pour dévier plusieurs fois les filaments (32), à l'intérieur de la matière plastique visqueuse.

17. Dispositif selon la revendication 16, caractérisé en ce qu'à la sortie de la chambre (14,26), est disposée au moins une filière (25′,27) pour le passage des filaments, enrobés dans la matière plastique.

18. Dispositif selon la revendication 17, caractérisé en ce qu'à la sortie de la chambre (14,26), est disposée une filière intermédiaire (25) et une filière de sortie (27).

19. Dispositif selon la revendication 18, caractérisé en ce que le diamètre de la filière de sortie (27) est légèrement supérieur à celui de la filière intermédiaire (25), par exemple de 2 % à 6 %.

20. Dispositif selon l'une quelconque des revendications 16 à 19, caractérisé en ce qu'il comporte, en outre, un dévidoir tournant (42) qui permet de faire tourner la bobine (39), contenant le pseudo-monofilament (30), autour de son axe longitudinal (46) ainsi qu'autour d'un axe transversal (48), perpendiculaire au premier et en ce qu'il est aussi prévu, sur ce dévidoir tournant (42), un frein à rouleaux (55) tournant avec lui, afin de limiter la torsion à une section (48), située en aval de ce frein à rouleaux (55).

21. Dispositif selon la revendication 20, caractérisé en ce qu'on prévoit un frein à rouleaux fixe (57), disposé à une certaine distance du frein à rouleaux (55) tournant.

22. Dispositif selon la revendication 20 ou 21, caractérisé en ce qu'il comporte en aval du dévidoir tournant (42), un outil de gainage (60) pour gainer le pseudo-monofilament (30) avec une gaine extérieure (68) de bonne résistance mécanique.

23. Dispositif selon la revendication 22, caractérisé en ce que l'outil de gainage (60) présente une chambre (61), destinée à recevoir un polymère fondu, une ouverture d'introduction (62) et une filière de sortie (66).

24. Dispositif selon la revendication 23, caractérisé en ce qu'une chambre à vide (71) est associée à l'outil de gainage (60).

Fig.1

EP 0 478 477 A1

Fig.2

EP 0 478 477 A1

Fig. 3 A

Fig. 3 B

Fig. 4

Fig.5

EP 0 478 477 A1

**Office européen des brevets**

# RAPPORT DE RECHERCHE EUROPEENNE

Numero de la demande

EP    91 42 0338

Page 1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0 125 953 (COUSIN FRERES S.A.)<br><br>* page 4, ligne 1 - ligne 20; figures 1-3 *<br>* page 5, ligne 18 - ligne 20; revendications 1-6 *<br>* page 6, ligne 5 - ligne 20 * | 1,8-11, 13,14, 16-18, 20-24 | D02G3/44<br>D02G3/40<br>B29C67/14<br>B29C53/14 |
| D | & US-A-4707977 | | |
| A | EP-A-0 330 980 (BASF AKTIENGESELLSCHAFT)<br><br>* page 12, ligne 32 - page 13, ligne 27; revendications 1-6; figures 1,2 * | 1,8-11, 13,14, 16-18, 20-24 | |
| A | EP-A-0 300 321 (K.K. KOBE SEIKO)<br><br>* colonne 6, ligne 18 - colonne 7, ligne 7; figures 1,2 * | 1,16,22, 23 | |
| A | PATENT ABSTRACTS OF JAPAN<br>vol. 7, no. 254 (M-255)(1399) 11 Novembre 1983<br>& JP-A-58 138 616 ( KATOU HATSUJIYOU K.K. ) 17 Août 1983<br>* le document en entier * | 1,16 | **DOMAINES TECHNIQUES RECHERCHES (Int. Cl.5)**<br><br>D02G<br>D07B<br>B29C<br>B29B |
| A | US-A-4 289 465 (KILLMEYER, DECEASED ET AL.)<br><br>* colonne 3, ligne 27 - ligne 55; revendications 1-8; figures 1-4 * | 1-3, 20-24 | |

-/--

Le présent rapport a été établi pour toutes les revendications

| Lieu de la recherche | Date d'achèvement de la recherche | Examinateur |
|---|---|---|
| LA HAYE | 06 JANVIER 1992 | TAMME H.-M.N. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)

14

Office européen
des brevets

**RAPPORT DE RECHERCHE EUROPEENNE**

Numero de la demande

EP    91 42 0338
Page 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0 226 420 (FUJI STANDARD RESEARCH INC.)<br><br>* colonne 6, ligne 13 - ligne 19; revendications 1,2,8,9,14; figures 1,2 *<br>* colonne 7, ligne 19 - ligne 22 *<br>* colonne 7, ligne 43 - ligne 17 *<br><br>----- | 1-3, 8-14, 16-18, 20-24 | |
| | | | **DOMAINES TECHNIQUES RECHERCHES (Int. Cl.5)** |

Le présent rapport a été établi pour toutes les revendications

| Lieu de la recherche | Date d'achèvement de la recherche | Examinateur |
|---|---|---|
| LA HAYE | 06 JANVIER 1992 | TAMME H.-M.N. |